# EUROPEAN PATENT APPLICATION

(11) **EP 0 592 088 A1**
(43) Date of publication of application: **13.04.1994**
(21) Application number: 93306481.8
(22) Date of filing: 17.08.1993
(51) Int. Cl.: G01P 13/02

(54) **Encoding device**

(30) Priority: 08.10.1992 GB 9221164
(71) Applicant: Meggitt (U.K.) Limited, Wimborne, Dorset, BH21 4EL (GB)
(72) Inventor: Wood, Roger Malcolm, Twickenham, Middlesex TW2 6BD (GB); Wilson, Alan, Southampton, Hants SO4 4XL (GB); Bigge, Martin Russell, Southampton, Hants SO4 5UB (GB)
(74) Representative: Skone James, Robert Edmund

(57) **Abstract**

An encoding device comprises a first indicator (8) which displays at a viewing position information relating to the variation in a first sensed condition; and a second indicator (9) including a member movable past the viewing position at a speed related to a second sensed condition and including means for modulating a radiation beam in accordance with its speed. The second indicator (9) also includes radiation beam guide means, wherein a radiation beam supplied to the viewing position, in use, impinges on the second indicator and is modulated by the modulation means of the second indicator and is guided by the radiation beam guide means on to the first indicator where it is modulated in accordance with the information displayed by the first indicator.

## Description

The invention relates to an encoding device, for example for use in a wind sensor for providing indications of wind speed and wind direction.

Existing electro/optic encoder systems for wind sensors employ single transmissive discs. Rotational speed measurements are achieved by monitoring the pulse frequency of regular graduations on the periphery of the encoder disc and absolute angular positions derived using multi-track bit codes which are applied to the disc and accessed via parallel read/transmit lines.

These conventional encoders are relatively complex and it would be desirable to develop a simpler approach.

In accordance with the present invention, an encoding device comprises a first indicator which displays at a viewing position information relating to the variation in a first sensed condition; and a second indicator including a member movable past the viewing position at a speed related to a second sensed condition and including means for modulating a radiation beam in accordance with its speed, the second indicator also including radiation beam guide means, wherein a radiation beam supplied to the viewing position, in use, impinges on the second indicator and is modulated by the modulation means of the second indicator and is guided by the radiation beam guide means on to the first indicator where it is modulated in accordance with the information displayed by the first indicator.

With this new encoding device, a single radiation beam is used to carry information from both the first and second indicators.

The invention is particularly suitable for use where the variation in the first sensed condition is relatively slow compared with the variation in the second sensed condition. Such a situation arises in a wind sensor, for example, in which a wind direction sensor would be coupled to the first indicator and a wind speed sensor would be coupled to the second indicator. Other suitable applications include monitoring variable pitch aircraft propellors (speed and pitch angle); on ships monitoring rudder angle and propellor speed; and monitoring other fluid (eg. liquid) flow speed and direction.

The radiation beam will typically comprise an optical beam although beams at non-optical wavelengths could also be used. The advantage of optical beams is that they can be supplied to the encoder via fibre optics.

The radiation guide means in the second indicator may comprise windows such as apertures extending through the second indicator; they may be formed by regions of the second indicator which are transparent to the radiation beam being employed; or formed by reflectors such as prisms.

Although the radiation beam could be conducted from the second indicator to the first indicator using additional guide means such as reflectors and waveguides, preferably the indicators are juxtaposed relative to one another so that a beam passing through the windows in the second indicator directly impinges on the first indicator without the need for additional guide means.

The first indicator may be in the form of an electronic display, for example a LCD display, but is preferably in the form of a moveable member carrying markings which define the absolute position of the member. Typically, the beam will be amplitude modulated by the first indicator although phase modulation is also possible.

Preferably, the first and second indicators comprise respective rotatable discs. This leads to a particularly compact construction. Other arrangements are possible, however, such as telescoped cylinders.

Typically, where the first indicator comprises a member carrying markings defining an absolute position, those markings are arranged in a set of tracks distributed transversely to the direction of movement of the first indicator, the second indicator has sets of radiation beam guide means regularly spaced along its length, each set having a guide aligned with each track. This enables the information in the individual tracks to be obtained. Discrimination between tracks could be achieved by scanning the beam transversely relative to the track direction. Preferably, however, the guides (eg. windows) in the second indicator are in sets extending transverse to the track direction and offset along the track direction so that a fixed beam will impinge onto each track in sequence.

Preferably, the modulating means of the second indicator comprises sets of regularly spaced windows extending in the direction of movement of the second indicator and positioned such that radiation beams passing through those windows will be reflected by the first indicator. This enables the beam sensor to obtain synchronisation information for reading the first indicator information and to determine the speed of the second indicator.

The passage of the radiation beam may occur in a number of ways. In one example, the radiation beam is transmitted through both indicators and passed from the first indicator to a receiver.

In a second, more compact example, the first indicator is reflective and the radiation beam impinges on the second indicator whereupon the beam is guided by the radiation beam guide means (eg. passes through windows) in the second indicator onto the first indicator where it is reflected and modulated, the modulated beam passing back via the radiation guide means in the second indicator to a receiver.

In a third example, the radiation guide means of the second indicator comprise reflection means such as prisms for reflecting a beam of radiation impinging laterally on the second indicator onto the first indicator. In this case, if the first indicator is reflective then the beam will be reflected back to the second indicator and returned to a receiver while if the first indicator is not reflective then the beam will be transmitted though the first indicator to further guide means which returns the modulated beam to a receiver.

An example of a wind sensor incorporating an encoding device according to the invention will now be described with reference to the accompanying drawings, in which:-
Figure 1 illustrates the wind sensor;
Figure 2 illustrates the encoder of the Figure 1 example in more detail;
Figures 3A-3C illustrate different examples of configurations for coupling light into the encoding discs;
Figure 4 illustrates the rotational speed disc in more detail; and,
Figure 5 illustrates the direction disc in more detail.

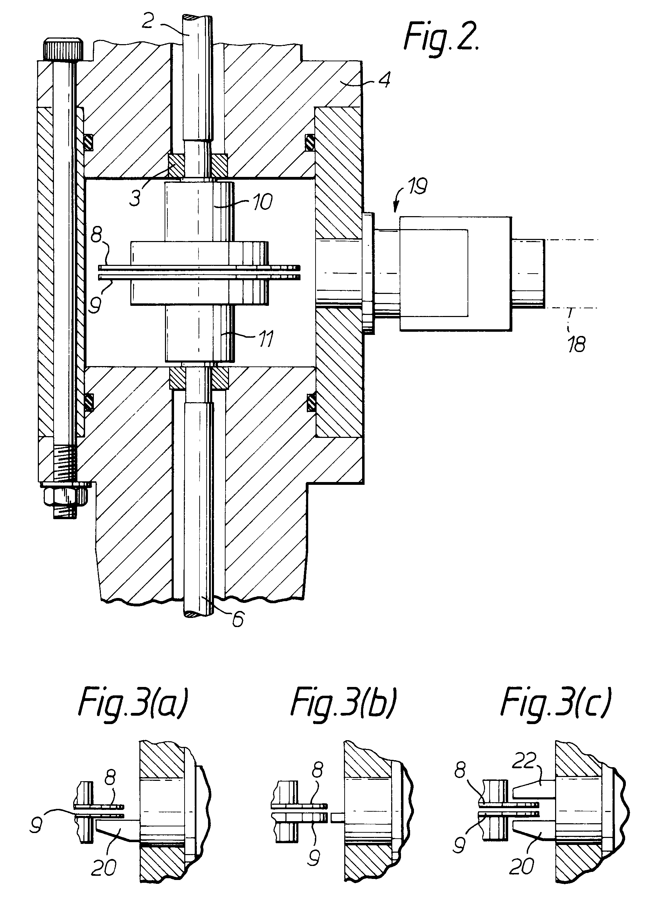

The wind sensor shown in the drawings comprises a wind vane 1 mounted to a shaft 2 (Figure 2) supported by bearings 3 in a shaft housing 4. The wind vane rotates into alignment with the wind direction thus causing the shaft 2 also to rotate.

The sensor also includes a set of wind cups 5 coupled to a shaft 6 supported by bearings 7 in the shaft housing 4. The wind cups 5 rotate at an angular speed which is related to the wind speed and cause an equivalent rotation of the shaft 6.

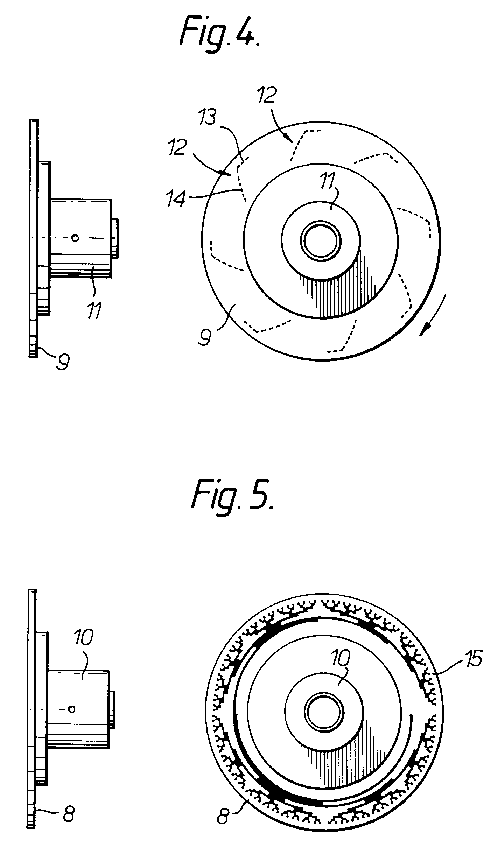

In order to detect movement of the shafts 2,6, the shafts are coupled to respective discs 8,9 via bosses 10,11. The rotational speed disc 9 is shown in more detail in Figure 4. As can be seen, it comprises a number of regular patterns of slits or windows 12 spaced at substantially equal intervals around the circumference of the disk. Each set of slits 12 includes a set of circumferentially extending slits 13 and a set of generally radially extending slits 14.

The disc 8 contains a number of concentric tracks onto which an absolute code is provided in a conventional manner. This code may be a binary, decimal, gray or some other format and may be generated to provide a reflective or transmissive conductor for the light beam as will be described below. The number of concentric tracks determines the degree of angular resolution provided.

As can be seen in Figure 2, the two discs are juxtaposed relative to one other and arranged such that in each set of slits 14, there is one slit corresponding to each track of the disc 8 while the slits 13 are positioned in alignment with an outer unmarked track 15 of the disc 8.

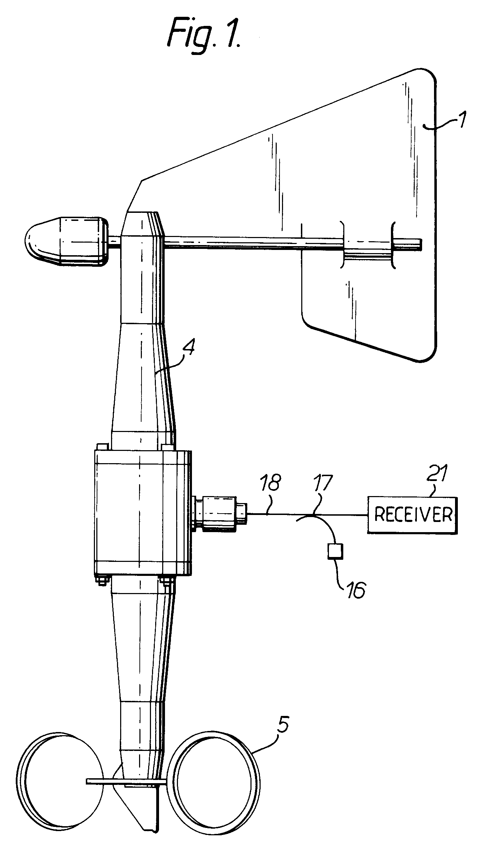

A light beam is supplied to the encoder from the light source 16 (Figure 1) via an optical coupler 17 and an optical fibre 18. The optical fibre 18 is coupled to a lens system 19 whim may take a variety of forms some of which are shown in Figure 3.

Figure 3A illustrates one arrangement for the lens system in which the disc 8 is reflective and light from the optical fibre 18 is passed to a reflector/lens 20 which reflects the incoming light normally onto the disc 9. Light passing through the windows in the disc 9 impinges on the disc 8 where it is reflected back through the windows in the disc 9 onto the reflector 20 and thereafter returns along the optical fibre 18 to a receiver 21.

Figure 3B illustrates another arrangement for the lens system in which the disc 9 is thicker and of a different design from the previous example and contains reflecting prisms or mirrors (not shown) disposed in a pattern identical to slits 12 which reflect light entering laterally into an edge of the disc 9 either back into the optical fibre 18 or on to the face of the disc 8. Once again, the light is reflected by the disc 8 back onto the prisms within the disc 9 and out along the optical fibre 18.

Figure 3C illustrates a transmissive system in which the disc 8 is not reflective but instead is transmissive. In this case, the system includes a pair of reflectors/lens 20,22. Light from the optical fibre 18 is reflected by the reflector/lens 20 onto the disc 9 and any light passing through the disc 9 impinges on the disc 8, is modulated, and then impinges on the reflector/lens 22 where it is reflected back into the optical fibre 18 or transmitted along another optical fibre to the receiver 21.

In operation, the position of the disc 8 is dependent upon the angular position of the wind vane 1 while the speed of rotation of the disc 9 is dependent on the speed of rotation of the wind cups 5. Light is passed along the optical fibre 18 to the encoder system where it is formed into a line extending radially over the outer part of the disc 9 with a length equal to the total width of each set of slits 12, or (not shown) a narrow light beam may be scanned across the slits 12.

It will be seen that since the disc 9 rotates in a clockwise direction as shown in Figure 4, initially light will pass through the circumferentially spaced slits 13 of each set 12 generating pulsed beams which impinge on the disc 8 but which are not modulated further since there is no information for that part of the disc 8. The pulsed beams are then returned to the receiver 21 in a manner depending upon the type of system adopted (see Figure 3) and this pulsed information is used for synchronisation and to determine the speed of rotation of the disc 9 and hence the wind speed. In an alternative arrangement (not shown) the slits 13 are replaced by reflectors.

Following the passage of the circumferentially spaced slits 13, light then impinges on the set of slits 14. As can be seen in Figure 4, the slits 14 are spaced both radially and circumferentially so that initially the light passes through the radially outermost slit of the set 14 and will impinge on the radially outer track of the disc 8. This beam will be amplitude modulated in dependence upon the underlying code and either transmitted through the disc 8 or reflected back through the radially outermost slit of the set 14 into the optical fibre 18. The next slit within the set 14 is then brought into alignment with the beam and the next, radially inner track on the disc 8 is exposed. This process continues until all the slits in the set 14 have been exposed to the light beam and hence the information on each underlying track has been passed back to the optical fibre 18 and to the receiver 21.

In an alternative arrangement (not shown) the slits 14 are replaced by reflectors.

It will be seen therefore that the optical signal passed to the receiver 21 is pulsed both by the passage of the set of slits 13 and the passage of the set of slits 14 of each set 12, the pulse frequency relating to the rotational speed of the disc 9, and is also modulated in series in accordance with the information in each of the tracks on the disc 8. The receiver 21 monitors the received optical signal and extracts the pulse frequency and the modulated information and then displays wind speed and direction on a LCD display and/or stores the information in a conventional manner.

## Claims

1. An encoding device comprising a first indicator (8) which displays at a viewing position information relating to the variation in a first sensed condition; and a second indicator (9) including a member movable past the viewing position at a speed related to a second sensed condition and including means for modulating a radiation beam in accordance with its speed, the second indicator also including radiation beam guide means, wherein a radiation beam supplied to the viewing position, in use, impinges on the second indicator and is modulated by the modulation means of the second indicator and is guided by the radiation beam guide means on to the first indicator where it is modulated in accordance with the information displayed by the first indicator.

2. A device according to claim 1, wherein the radiation beam guide means comprise windows (12).

3. A device according to claim 2, wherein the windows (12) in the second indicator comprise apertures extending through the second indicator.

4. A device according to claim 2 or claim 3, wherein the indicators (8,9) are juxtaposed relative to one another so that a beam passing through the windows in the second indicator directly impinges on the first indicator without the need for additional guide means.

5. A device according to claim 1, wherein the radiation beam guide means comprise reflectors.

6. A device according to claim 5, wherein the reflectors are prisms.

7. A device according to any of the preceding claims, wherein the first indicator (8) is a moveable member carrying markings which define the absolute position of the member.

8. A device according to claim 7, wherein the markings are arranged in a set of tracks distributed transversely to the direction of movement of the first indicator, the second indicator having sets of radiation beam guide means regularly spaced along its length, each set having a guide aligned with each track.

9. A device according to claim 8, wherein the guides in the second indicator are in sets extending transverse to the track direction and offset along the track direction.

10. A device according to any of the preceding claims, wherein the first and second indicators (8,9) comprise respective rotatable discs.

11. A device according to any of the preceding claims, wherein the first indicator is reflective whereby a radiation beam impinging on the second indicator is guided by the radiation guide means in the second indicator onto the first indicator where it is reflected and modulated, the modulated beam passing back via the radiation guide means in the second indicator to a receiver.

12. A device according to any of the preceding claims, wherein the modulating means of the second indicator comprises sets of regularly spaced windows extending in the direction of movement of the second indicator and positioned such that radiation beams passing through those windows will be reflected by the first indicator.

13. A device according to any of the preceding claims, wherein the radiation beam comprises an optical beam.

14. A wind sensor comprising an encoding device according to any of the preceding claims; a wind direction sensor (1) connected to the first indicator (8) of the encoding device; and a wind speed sensor (5) connected to the second indicator (9) of the encoding device.
